# EUROPÄISCHE PATENTSCHRIFT

(11) **EP 1 546 574 B1**
(45) Veröffentlichungstag und Bekanntmachung des Hinweises auf die Patenterteilung: **02.01.2008**
(21) Anmeldenummer: 03750308.3
(22) Anmeldetag: 03.09.2003
(51) Int. Cl.: F16F 9/05, B60G 11/28

(54) **TAUCHKOLBEN F R EINE LUFTFEDER**
PLUNGER FOR A PNEUMATIC SPRING
PISTON PLONGEUR POUR AMORTISSEUR PNEUMATIQUE

(30) Priorität: 11.09.2002 DE 10242436
(43) Veröffentlichungstag der Anmeldung: 29.06.2005
(73) Patentinhaber: BPW Bergische Achsen Kommanditgesellschaft, 51674 Wiehl (DE)
(72) Erfinder: MICHELS, Manfred, 51067 Köln (DE)
(74) Vertreter: Christophersen & Partner
(86) Internationale Anmeldenummer: PCT/DE2003/002909
(87) Internationale Veröffentlichungsnummer: WO 2004/027284

(56) Entgegenhaltungen:
- EP-A- 0 647 795
- WO-A-03/068540
- DE-U- 29 615 901

## Beschreibung

Die Erfindung betrifft einen Tauchkolben für eine Luftfeder, der über ein Zentrierelement auf einem Achskörper oder einem Längslenker einer Fahrzeugachse zentriert ist.

Tauchkolben der vorgenannten Art sind aus dem Stand der Technik in vielfacher Ausgestaltungsform bekannt und haben sich im alltäglichen Praxiseinsatz bewährt, siehe z.B. DE-U-29615901.

Die Fahrzeugachse eines Nutzfahrzeuges, insbesondere eines Anhängers oder eines Sattelaufliegers, besitzt einen Achskörper, der endseitig mittels mindestens eines Längslenkers am Fahrzeugrahmen beweglich angelenkt und gegenüber dem Fahrzeugrahmen durch jeweils eine über dem Kreuzungsbereich von Achskörper und Längslenker angeordnete Luftfeder abgestützt ist. Die Luftfeder ihrerseits besteht aus einem zwischen einem Deckel und einer Grundplatte angeordneten Luftfederbalg, wobei für eine mechanische Kopplung zwischen dem Luftfederbalg einerseits und dem Achskörper andererseits ein am Luftfederbalg angeordneter Tauchkolben vorgesehen ist. Dieser dient dem Luftfederbalg als Abrollfläche, so daß eine geführte Bewegung des sich im Betrieb ausdehnenden und wieder zusammenziehenden Luftfederbalges gewährleistet ist.

Das Zentrierelement ist üblicherweise in der Form eines Kegels ausgebildet und über entsprechende Verschraubungen am Achskörper oder einem Längslenker einer Fahrzeugachse angeordnet. Als Verschraubungen werden hierbei vorzugsweise Zuganker eingesetzt, die entsprechend im Zentrierelement sowie im Achskörper ausgebildete Bohrungen durchragen und nach einem Ausbilden der Verschraubung das Zentrierelement und den Achskörper gegeneinander verspannen. Für die Ausbildung einer dauerhaft sicheren Verbindung zwischen Zentrierelement einerseits und Achskörper andererseits sind die Zuganker in Bezug auf die kegelförmige Ausgestaltung des Zentrierelements möglichst nahe am Kegelrand anzuordnen. Entsprechend der Form eines Kegels nimmt die Materialstärke des Zentrierelements in Richtung auf den Kegelrand ab, so daß eine möglichst randnahe Anordnung der Zugelemente auf Grund der abnehmenden Materialstärke zu vermeiden ist. Es treffen mithin zwei einander sich widersprechende Anforderungen aufeinander. Für eine dauerhaft sichere Ausgestaltung der Verbindung von Zentrierelement und Achskörper sind die Zuganker möglichst nahe im Randbereich des kegelförmig ausgebildeten Zentrierelements angeordnet, doch kann dieser Forderung aufgrund der zum Kegelrand hin abnehmenden Materialstärke nicht so weit entsprochen werden, als dies für eine optimierte Verschraubung von Zentrierelement und Achskörper von Vorteil wäre. Gelöst wird dieses Problem im Stand der Technik (s. WO 03068540) derzeit durch eine verstärkte Materialausbildung des Zentrierelements, so daß eine Anordnung der Zuganker auch im Randbereich des kegelförmig ausgebildeten Zentrierelements möglich ist. In nachteiliger Weise ergibt sich hieraus jedoch eine erhöhte Bauform nicht nur des Zentrierelements, sondern in der Konsequenz auch eine erhöhte Bauform der gesamten Anordnung.

Ausgehend von einer Konstruktion der vorstehend beschriebenen Art liegt der Erfindung die **Aufgabe** zugrunde, eine Anordnung von Tauchkolben und Zentrierelement zu schaffen, die bei einer gleichzeitig sicheren Verbindung von Zentrierelement einerseits und Achskörper andererseits eine geringe Bauhöhe aufweist.

Zur **Lösung** dieser Aufgabe wird mit der Erfindung vorgeschlagen, daß der Tauchkolben im Randbereich der Kegelform eine Ausformung (18) aufweist, dass im Randbereich des Zentrierelements Zuganker angeordnet sind, die für eine Beibehaltung der Materialstärke des Zentrierelements (8) anteilig mit einem Fortsatz (19) über die Oberfläche des Zentrierelements (8) herausragen, und dass im Betriebszustand, wenn das Zentrierelement (8) lagesicher in den Tauchkolben verfahren ist, die Fortsätze (19) in die Ausformungen (18) des Tauchkolbens ragen.

Der besondere Vorteil der erfindungsgemäßen Lehre ist durch die mit der Ausformung im Tauchkolben geschaffenen Möglichkeit begründet, einen Aufnahmeraum für einen über die Oberfläche des Zentrierelements hinausragenden Fortsatz beispielsweise einer Verschraubung bereitzustellen.

Für eine Verbindung zwischen dem Zentrierelement und dem Achskörper oder dem Längslenker einer Fahrzeugachse werden, wie aus dem Stand der Technik vorbekannt, Verschraubungen, vorzugsweise in Form von Zugankern oder Zugstangen, verwendet. Im Unterschied zum Stand der Technik werden diese Zuganker für eine dauerhaft sichere Verbindung von Zentrierelement und Achskörper auch im Randbereich des kegelförmig ausgebildeten Zentrierelements angeordnet, wobei die Zuganker für eine Beibehaltung der erforderlichen Materialstärke des Zentrierelements anteilig mit einem Fortsatz über die Oberfläche des Zentrierelements herausragen. Im Betriebszustand, wenn also das Zentrierelement lagesicher in den Tauchkolben verfahren ist, ragen diese Fortsätze der Zuganker In die erfindungsgemäß dafür vorgesehenen Ausformungen des Tauchkolbens. Die vorbeschriebenen widerstreitenden Interessen können somit durch die erfindungsgemäße Ausgestaltung des Tauchkolbens gelöst werden. Bei gleichzeitiger Reduzierung der Bauhöhe über alles kann gleichwohl eine sichere Verbindung zwischen Zentrierelement und Achskörper durch die Anordnung von Zugankern auch im Randbereich des kegelförmig ausgebildeten Zentrierelements gewährleistet werden.

Die im Tauchkolben ausgebildete Ausformung ist vorzugsweise nach Art einer Tasche ausgebildet und weist eine korrespondierend zum im Betriebszustand von Tauchkolben und Zentrierelement in die als Tasche ausgebildete Ausformung hineinragenden Fortsatz ausgestaltete Kontur auf. In vorteilhafter Weise wird so eine platzsparende Ausgestaltung gewährleistet.

Gemäß einem besonderen Merkmal der Erfindung ist der Tauchkolben zweiteilig ausgeführt und besteht aus einem Grundkörper einerseits sowie einer Einlage andererseits. Der Grundkörper kann infolge dieser Ausgestaltung als gewichtsreduziertes Bauteil ausgeführt werden, denn ist es im Unterschied zu den aus dem Stand der Technik vorbekannten Bauelementen nicht erforderlich, daß dieser für eine Aufnahme des Zentrierelements mit diesem in direkten Kontakt tritt. Vorgesehen ist hierfür nämlich die im Betriebszustand zwischen Grundkörper und Zentrierelement zwischengeordnete Einlage. In vorteilhafter Weise kann der Grundkörper so als Hohlkörper ausgebildet sein, der für seine Stabilisierung und zur Abstützung der Einlage radial und/oder axial verlaufende Rippen aufweist. In Bezug auf die ungefährdeten Massen ergibt sich so eine deutliche Gewichtsreduzierung.

Gebildet sein kann der Grundkörper aus Kunststoff oder Metall, wobei im Hinblick auf die gewünschte Gewichtsreduzierung insbesondere Leichtmetalle, wie beispielsweise Aluminium oder Magnesium in Betracht kommen.

Für ein zielgerechtes Zusammenwirken von Tauchkolben einerseits und Zentrierelement andererseits weist der Grundkörper ebenso wie die Einlage eine korrespondierend zum Zentrierelement ausgebildete Kegelform auf, so daß nach einem Zusammenführen von Zentrierelement und Tauchkolben die Außenfläche des Zentrierelements an der am Grundkörper angeordneten Einlage anliegt.

Bei einer zweiteiligen Ausgestaltungsform des Tauchkolbens ist die erfindungsgemäß vorgesehene Ausformung sowohl in der Einlage als auch im Grundkörper des Tauchkolbens vorgesehen. Zu diesem Zweck verfügen sowohl der Grundkörper als auch die Einlage über eine entsprechend ausgebildete Ausformung, wobei bezüglich des Grundkörpers vorgesehen ist, daß diese eine zur Ausformung der Einlage korrespondierend ausgebildete Aufnahme aufweist. Diese Aufnahme wird dadurch gebildet, daß die Rippen des Grundkörpers eine entsprechend ausgebildete Kontur aufweisen. Diese Kontur schmiegt sich an die in der Einlage ausgebildete Ausformung an, so daß die Rippen des Grundkörpers eine sichere Abstützung der Einlage auch im Bereich der in der Einlage ausgebildeten Ausformung sicherstellen.

Gemäß einem weiteren Merkmal der Erfindung ist vorgesehen, daß die Einlage auf ihrer dem Zentrierelement zugewandten Seite mit einem Pufferelement für das Zentrierelement versehen ist. Diese bevorzugte Ausgestaltungsform der Erfindung weist den Vorteil auf, daß das Zentrierelement nicht ungebremst, das heißt ungefedert gegen die Einlage des Tauchkolbens stößt, sondern vielmehr durch das Pufferelement abgefedert an dieses herangeführt werden kann. In vorteilhafter Weise ergibt sich hierdurch ein verringerter Materialverschleiß und eine damit einhergehende Verlängerung der Lebensdauer.

Gemäß einem weiteren Merkmal der Erfindung ist das Pufferelement unter Zwischenordnung der Einlage mit einem auf der dem Zentrierelement gegenüberliegenden Seite des Grundkörpers angeordneten Puffer verbunden. Im Unterschied zum Pufferelement dient der Puffer nicht der Abfederung des Zentrierelementes, sondern der elastischen Auflage von Grundkörper und Deckel des Luftfederbalges. Die Kopplung von Puffer und Pufferelement schafft somit einen beidseitig des Tauchkolbens wirkenden, elastischen Anschlag, womit ein gegenüber dem Stand der Technik deutlich verringerter Verschleiß erzielt wird.

Gemäß einem weiteren Merkmal der Erfindung ist das Pufferelement mit dem Puffer unter Zwischenordnung einer Tragplatte verbunden, die zugleich den unteren Rand des Luftfederbalgs am Grundkörper festlegt. Diese Art der Anordnung erweist sich als insbesondere montagefreundlich, womit nicht nur eine Erstmontage auf vereinfachte Weise durchgeführt werden kann, auch eröffnet diese vorteilhafte Ausgestaltung der Konstruktion eine vereinfachte Demontage, was insbesondere im Reparaturfall oder bei einem gewünschten Austausch des Pufferelements oder des Puffers von Vorteil ist.

Gebildet wird die Verbindung zwischen Pufferelement und Puffer vorzugsweise durch eine Verschraubung, wobei durch die Verschraubung zwischen Pufferelement und Puffer zugleich auch die Einlage mit dem Grundkörper verbunden ist. Zur Montage des erfindungsgemäßen Tauchkolbens ist mithin auf der dem Zentrierelement zugewandten Seite die Einlage und auf der dem Zentrierelement abgewandten Seite des Grundkörpers der Puffer samt Tragplatte zu positionieren. Sodann ist das dem Zentrierelement zugewandte Pufferelement in die Einlage einzusetzen und mittels einer den Grundkörper und die Tragplatte durchragenden Verschraubung mit dem Puffer lösbar zu verbinden. Mittels der Verschraubung zwischen Pufferelement und Puffer wird so eine Klemmwirkung erzielt, mit welcher sämtliche zwischen dem Pufferelement und dem Puffer angeordnete Baukomponenten eingeklemmt werden. Hierzu gehören die am Puffer angeordnete Tragplatte, der Grundkörper sowie die vom Grundkörper aufgenommene Einlage. Die Tragplatte legt zudem in vorteilhafter Weise den unteren Rand des Luftfederbalges am Grundkörper fest, so daß auch dieser nur durch den Einsatz dieser einen Verschraubung unverrutschbar am Grundkörper angeordnet ist.

Der erfindungsgemäße Tauchkolben zeichnet sich insbesondere durch seine Einfachheit hinsichtlich der verwendeten Einzelbestandteile aus, was in vorteilhafter Weise eine kostengünstige Herstellung sowie eine einfach durchzuführende Montage ermöglicht. Zudem ergibt sich durch erfindungsgemäße Zweiteilung des Tauchkolbens eine Verringerung ungefährdeten Massen.

Weitere Merkmale und Vorteile der Erfindung ergeben sich aus der Beschreibung anhand der Figuren. Dabei zeigen:
- Fig. 1: in einer teilgeschnittenen Seitenansicht einen im Betriebszustand befindlichen Tauchkolben;
- Fig.2: in einer perspektivischen Darstellung den Grundkörper erfindungsgemäßen Tauchkolbens und
- Fig. 3: in einer perspektivischen Darstellung die Einlage erfindungsgemäßen Tauchkolbens.

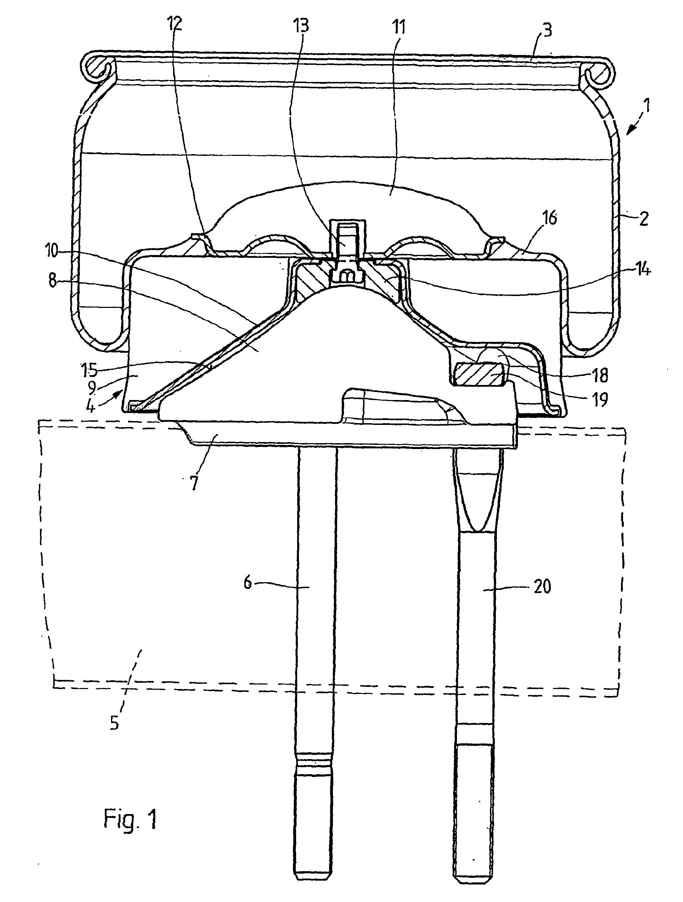

Dargestellt ist in Fig. 1 eine Luftfeder 1. Das obere Ende des den Hauptbestandteil der Luftfeder 1 bildenden Rollbalgs 2 ist an einem Deckel 3, der zugleich die obere Abschlußplatte der Luftfeder 1 bildet, befestigt. Dieser Deckel 3 ist über eine Verschraubung fest mit der Unterseite des in dieser Fig. nicht dargestellten Fahrzeugrahmens verbunden. Im Betrieb rollt der Rollbalg 2 an der äußeren zylindrischen Mantelfläche des Tauchkolbens 4 ab.

Fig. 1 zeigt ferner einen Achskörper 5 mit einem im wesentlichen quadratischen Querschnitt, an dem die in der Fig. nicht dargestellten Räder des Fahrzeuges angeordnet sind. Angeordnet am Achskörper 5 sind mittels der Zugstangen 6 eine Grundplatte 7, die ihrerseits mit einem Zentrierelement 8 verbunden ist.

Bei dem in Fig. 1 beispielhaft dargestellten Tauchkolben handelt es sich um einen Tauchkolben für eine Luftfeder, der im Betriebszustand über ein Zentrierelement auf einem Achskörper oder einem Längslenker einer Fahrzeugachse zentriert ist. Im entlasteten Zustand des Achskörpers 5, welcher beispielsweise dann eintritt, wenn der den Achskörper 5 aufweisende Anhänger oder Sattelauflieger zu Verladezwecken angehoben wird, wird der Luftfederbalg oder Rollbalg 2 in Bezug auf seine Längsausrichtung auf ein Maximum ausgefaltet, das heißt ausgedehnt. Sobald der Anhänger oder der Sattelauflierger im Nachgang zu einem Verladevorgang wieder abgestellt und der Achskörper 5 somit aus dem entlasteten zurück in den belasteten Zustand gebracht wird, erfolgt eine Überführung des Luftfederbalges oder Rollbalges 2 aus seiner gedehnten Stellung zurück in seine Normalstellung. Um dafür Sorge zu tragen, daß es bei einer Zurückführung des Luftfederbalgs in seine Normalstellung nicht zu ungewollter Faltenbildung oder Verwerfung im Luftfederbalgmaterial kommt, ist das Zentrierelement 8 vorgesehen, welches beim Zurücküberführen des Luftfederbalges in seine Normalstellung in den Tauchkolben 4 der Luftfeder 1 eingreift. In vorteilhafter Weise kann so eine infolge eines Verladevorganges auftretende Zerstörung des Luftfederbalges 2 vermieden und die Funktionstüchtigkeit der Luftfeder 1 gewährleistet werden. Die erfindungsgemäße Ausgestaltung ist jedoch nicht auf die vorbeschriebene beispielhafte Ausgestaltung beschränkt, vielmehr versteht es sich von selbst, daß die Vorteile der erfindungsgemäß vorgesehenen Ausformung des Tauchkolbens auch dann greifen, wenn eine Tauchkolbenanordnung vorgesehen ist, die keine getrennte Anordnung von Tauchkolben und Zentrierelement im entlasteten Zustand aufweist.

Der in Fig. 1 dargestellte Tauchkolben 4 besteht erfindungsgemäß aus einem Grundkörper 9 und einer Einlage 10. Diese sind hinsichtlich ihrer geometrischen Kontur korrespondierend derart zueinander ausgebildet, daß der Grundkörper 9 die Einlage 10 im wesentlichen formschlüssig aufnimmt. Auf der dem Zentrierelement 8 abgewandten Seite des Grundkörpers 9 ist ein Puffer 11 vorgesehen, der unter Zwischenschaltung einer Tragplatte 12 am Grundkörper 9 befestigt ist. Erreicht wird diese Befestigung durch eine Verschraubung 13, mit welcher der Puffer 11 und ein auf der dem Zentrierelement 8 zugewandten Seite des Grundkörpers 9 angeordnetes Pufferelement 14 gegeneinander verspannt werden. Auf einfache Weise ist so der Puffer 11 als auch das Pufferelement 14 am Grundkörper 9 angeordnet.

Durch die vorgenannte Verschraubung 13 sind zudem die zwischen dem Puffer 11 einerseits und dem Pufferelement 14 andererseits angeordneten Zwischenelemente mitverspannt. Zu diesen Zwischenelementen gehören die Grundplatte 7, der Grundkörper 9 sowie die Einlage 10. Zudem wird der untere Rand 16 des Rollbalges 2 zwischen der Tragplatte 12 und dem Grundkörper 9 derart eingespannt, daß dieser unverrutschbar am Grundkörper 9 festgelegt ist. Auf einfache Weise kann durch die vorbeschriebene Verschraubung 13 mithin nicht nur eine Verbindung der den Tauchkolben 4 bildenden Grundkörper 9 und Einlage 10 geschaffen werden, auch wird durch diese Verschraubung 13 eine Anordnung des Puffers 11 samt zugehöriger Tragplatte 12 sowie des Pufferelements 14 erreicht, wobei der untere Rand 16 des Rollbalgs 2 zwischen Grundkörper 9 einerseits und Tragplatte 12 des Puffers 11 andererseits festgeklemmt wird.

Wie Fig. 1 weiter zu entnehmen ist, ist das Zentrierelement 8 auf seiner der Einlage 10 zugewandten Seite mit einer korrespondierend zur Einlage 10 ausgebildeten Oberfläche 15 versehen. Die Oberfläche 15 des Zentrierelements 8 ist bevorzugterweise leicht gewölbt, das heißt bauchig ausgeführt, so daß ein in den Tauchkolben 4 hineingeführtes Zentrierelement vorzugsweise ausschließlich am Pufferelement 14 anliegt und im übrigen ein Kontakt zwischen der Oberfläche 15 des Zentrierelements 8 und der Einlage 10 nicht zustande kommt. In vorteilhafter Weise wird so ein nahezu ausschließlich über das Pufferelement 14 verlaufender Kraftfluß gewährleistet.

Verbunden ist das Zentrierelement 8 mit dem Achskörper 5 mittels einer durch Zugstangen 6 gebildeten Verschraubung, wobei exemplarisch in Fig. 1 eine als Federbügel 20 ausgebildete Zugstange 6 gezeigt ist. Dieser Federbügel 20 ermöglicht unter Beibehaltung der notwendigerweise erforderlichen Materialstärke des Zentrierelements 8 eine Verbindung von Zentrierelement 8 und Achskörper 5 auch im Randbereich des kegelförmig ausgebildeten Zentrierelements 8. Wie Fig. 1 deutlich zu entnehmen ist, ragt der Federbügel 20 anteilig mit einem durch das Bügelelement gebildeten Fortsatz 19 über die vom Zentrierelement 8 gebildete Oberfläche 15 hinaus. Um diesen Fortsatz 19 entsprechend seiner Ausgestaltung aufnehmen zu können, ist der Tauchkolben 4 auf seiner dem Zentrierelement 8 zugewandten Seite mit einer entsprechenden Ausformung 18 versehen. In diese Ausformung 18 ragt der Fortsatz 19 dergestalt hinein, daß ein sicheres Anliegen des Zentrierelements 8 an der dem Zentrierelement zugewandten Seite des Tauchkolbens bei gleichzeitiger Reduzierung der Gesamtbauhöhe sichergestellt ist.

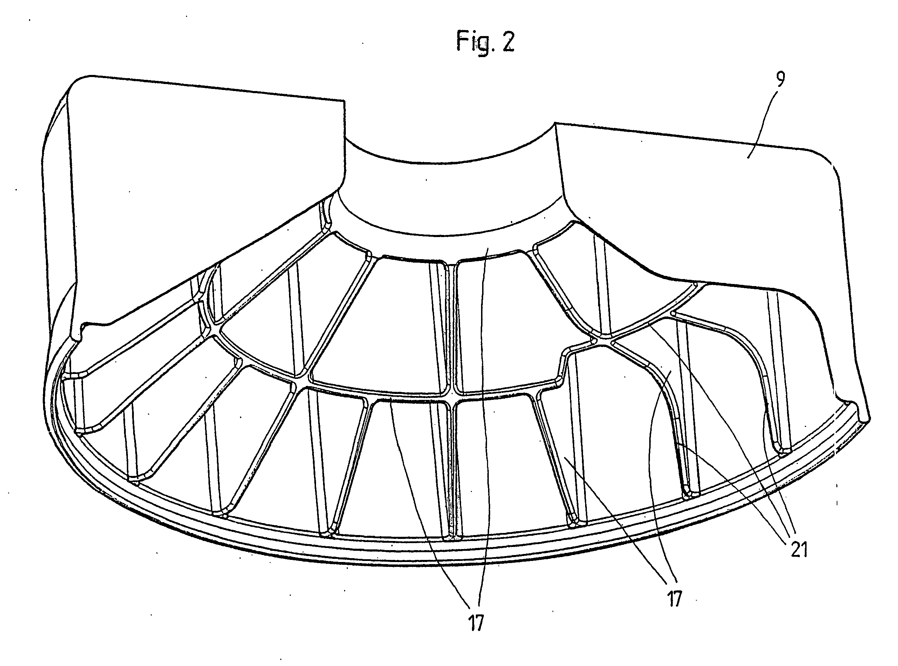

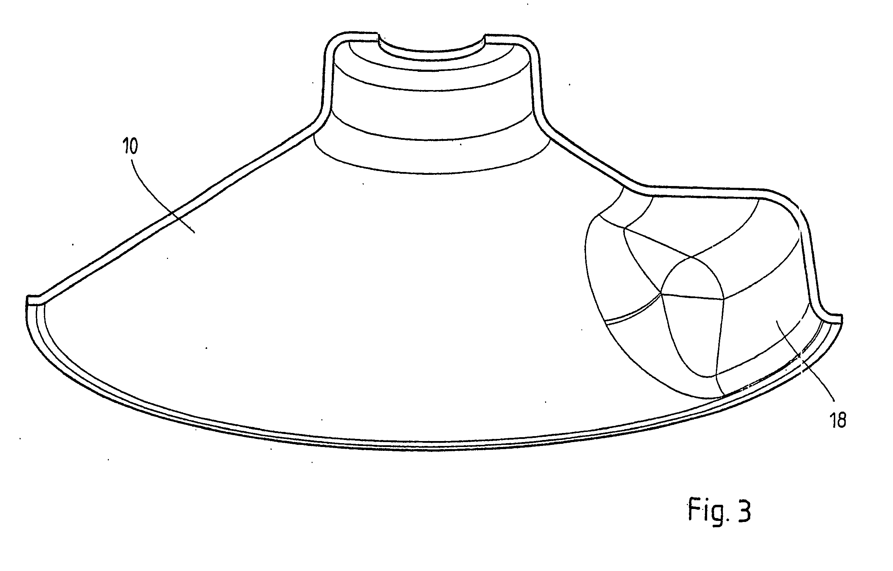

Die Fign. 2 und 3 zeigen in einer perspektivischen Darstellung den Grundkörper 9 bzw. die Einlage 10 des Tauchkolbens 4. Fig. 2 kann dabei entnommen werden, daß der Grundkörper 9 dem Grunde nach als Hohlkörper ausgebildet ist, der für eine hinreichende Stabilisierung und zur Abstützung der Einlage mit radial und axial verlaufenden Rippen 17 versehen ist. Diese Art der Ausgestaltung des Grundkörpers 9 ermöglicht eine gewichtoptimierte Ausgestaltung, wobei die in Fig. 3 dargestellte Einlage im gemäß Fig. 1 gezeigten Betriebszustand zwischen Grundkörper 9 und Zentrierelement 8 angeordnet ist. Sichergestellt wird durch diese Anordnung der Einlage 10, daß ein in den Tauchkolben 4 eingeführtes Zentrierelement 8 ungehindert in die in Fig. 1 dargestellte Position überführt werden kann, und zwar unabhängig von der zu Beginn eines Einführvorgangs relativen Lage von Tauchkolben 4 einerseits und Zentrierelement 8 andererseits.

Wie den Fign. 2 und 3 des weiteren entnommen werden kann, verfügt die Einlage 10 über die schon in Bezug auf Fig. 1 beschriebene Ausformung 18, die - wie Fig. 2 entnommen werden kann - in eine entsprechend ausgebildete Aufnahme 21 des Grundkörpers 9 hineinragt. Die im Grundkörper 9 ausgebildete Aufnahme 21 ist dabei durch eine entsprechende Ausgestaltung der Rippen gebildet, die im Bereich der Aufnahme 21 eine solche Kontur aufweisen, daß sie korrespondierend zu der in der Einlage 10 ausgebildeten Ausformung 18 ausgestaltet sind. Diese Rippenkontur kann insbesondere Fig. 2 entnommen werden.

Die montierte Anordnung von Grundkörper 9 und Einlage 10 zeigt die schon beschriebene Fig. 1. Zu erkennen ist hier, daß die Einlage 10 sich in ihrer Kontur an den Grundkörper 9 derart anschmiegt, daß die Einlage 10 auch im Bereich ihrer Ausformung 18 abstützend von den Rippen 10 des Grundkörpers 9 getragen wird. Es versteht sich dabei von selbst, daß die zweiteilige Ausgestaltungsform des Tauchkolbens 4 eine besondere Art der Ausgestaltung darstellt, daß die erfindungsgemäße Ausgestaltung der Ausformung 18 jedoch auch dann realisierbar ist, wenn der Tauchkolben 4 einstückig oder mehrstückig ausgebildet ist. Entscheidend kommt es vielmehr darauf an, daß mit der erfindungsgemäßen Ausgestaltung des Tauchkolbens eine Anordnung von Zugankern oder Zugstangen, die beispielsweise gemäß dem Ausführungsbeispiel nach Fig. 1 als Federbügel 20 ausgebildet sein können, auch im Randbereich des kegelförmig ausgebildeten Zentrierelements möglich ist, wobei es infolge der notwendigerweise vorzusehenden Materialstärke des Zentrierelements im Randbereich dazu kommt, daß die Zugstange zumindest mit einem Teil über die Oberfläche des Zentrierelements herausragt. Um gleichwohl eine niedrige Bauhöhe von Tauchkolben und Zentrierelement im Betriebszustand sicherstellen zu können, ist der Tauchkolben auf seiner dem Zentrierelement zugewandten Seite mit einer entsprechenden Ausformung für einen über die Oberfläche 15 des Zentrierelements 8 herausragenden Fortsatz vorgesehen. Dabei sind je nach Anzahl der über die Oberfläche 15 des Zentrierelements 8 herausragenden Fortsätze entsprechend viele Ausformungen 18 im Tauchkolben 4 vorzusehen.

### Bezugszeichenliste

- 1: Luftfeder
- 2: Rollbalg
- 3: Deckel
- 4: Tauchkolben
- 5: Achskörper
- 6: Zugstange
- 7: Grundplatte
- 8: Zentrierelement
- 9: Grundkörper
- 10: Einlage
- 11: Puffer
- 12: Tragplatte
- 13: Verschraubung
- 14: Pufferelement
- 15: Oberfläche
- 16: unterer Rand
- 17: Rippe
- 18: Ausformung
- 19: Fortsatz
- 20: Federbügel
- 21: Aufnahme

## Patentansprüche

1. Tauchkolben für eine Luftfeder (1), der über ein Zentrierelement (8) auf einem Achskörper (5) oder einem Längslenker einer Fahrzeugachse zentriert ist und auf seiner dem Zentrierelement (8) zugewandten Seite eine zur Form des Zentrierelementes (8) korrespondierende Kegelform aufweist, **dadurch gekennzeichnet, dass** der Tauchkolben im Randbereich der Kegelform eine Ausformung (18) aufweist, dass im Randbereich des Zentrierelements Zuganker angeordnet sind, die für eine Beibehaltung der Materialstärke des Zentrierelements (8) anteilig mit einem Fortsatz (19) über die Oberfläche des Zentrierelements (8) herausragen, und dass im Betriebszustand, wenn das Zentrierelement (8) lagesicher in den Tauchkolben verfahren ist, die Fortsätze (19) in die Ausformungen (18) des Tauchkolbens ragen.

2. Tauchkolben nach Anspruch 1, **dadurch gekennzeichnet, daß** die Ausformung (18) nach Art einer Tasche ausgebildet ist und der Aufnahme eines über die Oberfläche (15) des Zentrierelements (8) hinausragenden Fortsatzes (19) dient.

3. Tauchkolben nach Anspruch 1 oder 2, **dadurch gekennzeichnet, daß** die Ausformung (18) im wesentlichen korrespondierend zum Fortsatz (19) ausgebildet ist.

4. Tauchkolben nach einem der Ansprüche 1 bis 3, **dadurch gekennzeichnet, daß** der Fortsatz (19) Teil einer Verschraubung, insbesondere eines Federbügels (20), ist, der das Zentrierelement (8) mit dem Achskörper (5) verbindet.

5. Tauchkolben nach einem der vorhergehenden Ansprüche, **dadurch gekennzeichnet, daß** der Tauchkolben aus einem die Abrollfläche für den Luftfederbalg (2) bildenden Grundkörper (9) und aus einer mit dem Zentrierelement (8) zusammenwirkenden Einlage (10) besteht.

6. Tauchkolben nach einem der vorhergehenden Ansprüche, **dadurch gekennzeichnet, daß** die Einlage (10) eine Ausformung (18) aufweist.

7. Tauchkolben nach einem der vorhergehenden Ansprüche, **dadurch gekennzeichnet, daß** der Grundkörper (9) eine zur Ausformung (18) der Einlage (10) korrespondierend ausgebildete Aufnahme (21) aufweist.

8. Tauchkolben nach einem der Ansprüche 1 bis 7, **dadurch gekennzeichnet, daß** der Grundkörper (9) zur Abstützung der Einlage (10) radial und/oder axial verlaufende Rippen (17) aufweist.

9. Tauchkolben nach einem der vorhergehenden Ansprüche 1 bis 8, **dadurch gekennzeichnet, daß** die Rippen (17) des Grundkörpers (9) zur Ausbildung der Aufnahme (21) eine entsprechend ausgebildete Kontur aufweisen.

10. Tauchkolben nach einem der Ansprüche 1 bis 9, **dadurch gekennzeichnet, daß** die Einlage (10) eine mit dem Zentrierelement (8) korrespondierend ausgebildete Gegenkontur aufweist.

11. Tauchkolben nach einem der Ansprüche 1 bis 10, **dadurch gekennzeichnet, daß** der Grundkörper (9) und/oder die Einlage (10) aus Kunststoff oder Metall gebildet sind.

12. Tauchkolben nach einem der vorhergehenden Ansprüche, **dadurch gekennzeichnet, daß** die Einlage (10) auf ihrer dem Zentrierelement (8) zugewandten Seite mit einem Pufferelement (14) für das Zentrierelement (8) versehen ist.

13. Tauchkolben nach einem der vorhergehenden Ansprüche, **dadurch gekennzeichnet, daß** das Pufferelement (14) unter Zwischenordnung der Einlage (10) mit einem auf der dem Zentrierelement (8) gegenüberliegenden Seite des Grundkörpers (9) angeordneten Puffer (11) verbunden ist.

14. Tauchkolben nach einem der vorhergehenden Ansprüche, **dadurch gekennzeichnet, daß** das Pufferelement (14) mit dem Puffer (11) unter Zwischenordnung einer Tragplatte (12) verbunden ist, die zugleich den unteren Rand (16) des Luftfederbalgs (2) am Grundkörper (9) festlegt.

15. Tauchkolben nach einem der vorhergehenden Ansprüche, **dadurch gekennzeichnet, daß** die Verbindung zwischen Pufferelement (14) und Puffer (11) durch eine Verschraubung (13) gebildet ist.

16. Tauchkolben nach einem der vorhergehenden Ansprüche, **dadurch gekennzeichnet, daß** durch die Verschraubung (13) zwischen Pufferelement (14) und Puffer (11) zugleich auch die Einlage (10) mit dem Grundkörper (9) verbunden ist.

## Claims

1. Plunger for an air spring (1), which is centred by means of a centring element (8) on an axle body (5) or a trailing arm of a vehicle axle and has on its side facing the centring element (8) a spherical element corresponding to the shape of the centring element (8), **characterised in that** the plunger has a cut-out (18) in the peripheral area of the spherical element, **in that** through-bolts are arranged in the peripheral area of the centring element, which, in order to retain the material thickness of the centring element (8) project proportionally with an extension piece (19) over the surface of the centring element (8), and **in that**, in the operating state, when the centring element (8) has travelled into a secure position in the plunger, the extension pieces (19) project into the cut-outs (18) of the plunger.

2. Plunger according to Claim 1, **characterised in that** the cut-out (18) is formed in the shape of a pocket and serves to accommodate an extension piece (19) projecting over the surface (15) of the centring element (8).

3. Plunger according to Claim 1 or 2, **characterised in that** the cut-out (18) is formed essentially corresponding to the extension piece (19).

4. Plunger according to any one of Claims 1 to 3, **characterised in that** the extension piece (19) is part of a screw element, in particular a spring clamp (20), which connects the centring element (8) to the axle body (5).

5. Plunger according to any one of the preceding claims, **characterised in that** the plunger consists of a basic body (9) forming the rolling surface for the air spring bellows (2) and an insert piece (10) interacting with the centring element (8).

6. Plunger according to any one of the preceding claims, **characterised in that** the insert piece (10) has a cut-out (18).

7. Plunger according to any one of the preceding claims, **characterised in that** the basic body (9) has an accommodation piece (21) formed so as to correspond to the cut-out (18) of the insert piece (10).

8. Plunger according to any one of Claims 1 to 7, **characterised in that** the basic body (9) has ribs (17) running radially and/or axially to support the insert piece (10).

9. Plunger according to any one of the preceding Claims 1 to 8, **characterised in that** the ribs (17) of the basic body (9) have a contour designed so as to accord with the formation of the accommodation piece (21).

10. Plunger according to any one of Claims 1 to 9, **characterised in that** the insert piece (10) has a counter-contour designed so as to correspond to the centring element (8).

11. Plunger according to any one of Claims 1 to 10, **characterised in that** the basic body (9) and/or the insert piece (10) are formed from plastic or metal.

12. Plunger according to any one of the preceding claims, **characterised in that** the insert piece (10) is provided on its side facing the centring element (8) with a buffer element (14) for the centring element (8).

13. Plunger according to any one of the preceding claims, **characterised in that** the buffer element (14) is connected, with the intermediate arrangement of the insert piece (10), to a buffer (11) arranged on the side of the basic body (9) located opposite the centring element (8).

14. Plunger according to any one of the preceding claims, **characterised in that** the buffer element (14) is connected to the buffer (11) with the intermediate arrangement of a carrier plate (12), which at the same time secures the lower edge (16) of the air spring bellows (2) at the basic body (9).

15. Plunger according to any one of the preceding claims, **characterised in that** the connection between the buffer element (14) and the buffer (11) is formed by a screw arrangement (13).

16. Plunger according to any one of the preceding claims, **characterised in that**, by means of the screw arrangement (13) between the buffer element (14) and buffer (11), the insert piece (10) is at the same time connected to the basic body (9).

## Revendications

1. Piston plongeur pour un coussin d'air (1), qui est centré au moyen d'un élément de centrage (8) sur un corps d'essieu (5) ou un bras oscillant longitudinal d'un essieu de véhicule et présente une forme conique correspondant à la forme de l'élément de centrage (8) sur son côté associé à l'élément de centrage (8), **caractérisé en ce que** le piston plongeur présente une moulure (18) dans la zone périphérique de la zone dans la forme conique, **en ce que** dans la zone périphérique de l'élément de centrage sont disposés des tirants d'ancrage qui dépassent de façon proportionnelle avec un prolongement (19) de la surface de l'élément de centrage (8) pour conserver l'épaisseur de matériau de l'élément de centrage (8) et **en ce que**, dans l'état de service, lorsque l'élément de centrage (8) est déplacé dans le piston plongeur de façon sécurisée en position, les prolongements (19) dépassent dans les moulures (18) du piston plongeur.

2. Piston plongeur selon la revendication 1, **caractérisé en ce que** la moulure (18) est conçue à la façon d'une poche et sert au logement d'un prolongement (19) dépassant de la surface (15) de l'élément de centrage (8).

3. Piston plongeur selon la revendication 1 ou 2, **caractérisé en ce que** la moulure (18) est conçue de façon à correspondre sensiblement au prolongement (19).

4. Piston plongeur selon l'une quelconque des revendications 1 à 3, **caractérisé en ce que** le prolongement (19) fait partie d'un raccord vissé, en particulier d'un étrier à ressort (20), qui relie l'élément de centrage (8) au corps d'essieu (5).

5. Piston plongeur selon l'une quelconque des revendications précédentes, **caractérisé en ce que** le piston plongeur est constitué d'un corps de base (9) formant la surface de déroulement pour le soufflet à coussin d'air (2) et d'une insertion (10) coopérant avec l'élément de centrage (8).

6. Piston plongeur selon l'une quelconque des revendications précédentes, **caractérisé en ce que** l'insertion (10) présente une moulure (18).

7. Piston plongeur selon l'une quelconque des revendications précédentes, **caractérisé en ce que** le corps de base (9) présente un logement (21) formé de façon à correspondre à la moulure (18) de l'insertion (10).

8. Piston plongeur selon l'une quelconque des revendications 1 à 7, **caractérisé en ce que** le corps de base (9) présente des nervures (17) agencées radialement et/ou axialement pour le soutien de l'insertion (10).

9. Piston plongeur selon l'une quelconque des revendications 1 à 8 précédentes, **caractérisé en ce que** les nervures (17) du corps de base (9) présentent pour la réalisation du logement (21) un contour réalisé de façon appropriée.

10. Piston plongeur selon l'une quelconque des revendications 1 à 9, **caractérisé en ce que** l'insertion (10) présente un contre-contour conçu de façon correspondante à l'élément de centrage (8).

11. Piston plongeur selon l'une quelconque des revendications 1 à 10, **caractérisé en ce que** le corps de base (9) et/ou l'insertion (10) est ou sont formé(s) à base de plastique ou de métal.

12. Piston plongeur selon l'une quelconque des revendications précédentes, **caractérisé en ce que** l'insertion (10) est dotée sur son côté associé à l'élément de centrage (8) d'un élément tampon (14) pour l'élément de centrage (8).

13. Piston plongeur selon l'une quelconque des revendications précédentes, **caractérisé en ce que** l'élément tampon (14) est relié avec l'intercalation de l'insertion (10) à un tampon (11) disposé sur le côté, opposé à l'élément de centrage (8), du corps de base (9).

14. Piston plongeur selon l'une quelconque des revendications précédentes, **caractérisé en ce que** l'élément tampon (14) est relié au tampon (11) avec l'intercalation d'une plaque support (12), qui fixe en même temps le bord (16) inférieur du soufflet à coussin d'air (2) sur le corps de base (9).

15. Piston plongeur selon l'une quelconque des revendications précédentes, **caractérisé en ce que** la liaison entre l'élément tampon (14) et le tampon (11) est formée par un raccord vissé (13).

16. Piston plongeur selon l'une quelconque des revendications précédentes, **caractérisé en ce que** également l'insertion (10) est reliée en même temps au corps de base (9) par le raccord vissé (13) entre l'élément tampon (14) et le tampon (11).
